# EUROPÄISCHE PATENTANMELDUNG

(11) **EP 3 789 742 A1**
(43) Veröffentlichungstag der Anmeldung: **10.03.2021**
(21) Anmeldenummer: 19196200.0
(22) Anmeldetag: 09.09.2019
(51) Int. Cl.: G01G 17/00, G01G 19/52, G01G 23/00

(54) **VORRICHTUNG ZUM HEBEN EINES CONTAINERS UND ERMITTELN EINER GEWICHTSKRAFT DES CONTAINERS**

(71) Anmelder: Planung Bau Inbetriebnahme von elektrischen Industrieanlagen GmbH, 50354 Hürth (DE)
(72) Erfinder: ZIEGLER, Jürgen, 50354 Hürth (DE)
(74) Vertreter: König, Gregor Sebastian

(57) **Zusammenfassung**

Die Erfindung betrifft eine Vorrichtung zum Heben eines Containers und Ermitteln einer Gewichtskraft des Containers, aufweisend einen Spreader mit Twistlocks oder anderweitigen Verriegelungsmitteln zum Verriegeln mit dem Container, und eine mit dem Spreader verbundene Traverse, wobei entlang einer Verbindungslinie zwischen Spreader und Traverse mindestens ein Sensor außerhalb des Spreaders und der Twistlocks oder Verriegelungsmittel vorgesehen ist, mit dem eine von der Gewichtskraft des angehobenen Containers abhängige Größe messbar ist.

## Beschreibung

Die Erfindung betrifft eine Vorrichtung zum Heben eines Containers und Ermitteln einer Gewichtskraft des Containers. Die Erfindung betrifft auch ein Verfahren zum Ermitteln einer Gewichtskraft eines angehobenen Containers, ferner betrifft die Erfindung ein Verwenden eines Sensors zum Ermitteln einer Gewichtskraft eines angehobenen Containers.

Zum Transport von Gütern aller Art werden üblicherweise Container, d. h. Großraum-Behälter verwendet, wobei es sich bei den Großraum-Behältern insbesondere um in verschiedensten Größen genormte und standardisierte Behälter handeln kann.

Es ist wünschenswert, die Gewichtskraft bzw. Masse eines Containers zu bestimmen, den Container gleichsam zu wiegen.

Es ist bekannt, die Gewichtskraft eines Containers mittels einer als LKW-Waage bezeichneten Wiegeeinrichtung zu wiegen.

DE 10 2016 101 917 A1 offenbart eine Wiegevorrichtung zum Wiegen einer an einem Twistlock- ggf. mit klappbarem Greiferarm-System (auch Piggyback genannt) angeordneten Last mit zumindest einer Wiegeeinheit, welche einem Bolzen des Twistlock-Systems zugeordnet ist. Bei der Last kann es sich insbesondere um einen Container oder Wechselbehälter handeln.

Nachteilig bei den bekannten Lösungen ist, dass zum einen ein vom Umladen unabhängiger Vorgang zum Wiegen verwendet werden muss und zum anderen die Wiegeeinheit bzw. Teile der Wiegeeinheit häufig beschädigt werden, da die Wiegeeinheit großen mechanischen Belastungen in einem harschen Umfeld ausgesetzt ist. Gerade im Bereich der Verladung der Container wird das für das Verladen verwendete Material von den Kranführern sehr starken Belastungen ausgesetzt.

Es ist daher Aufgabe der Erfindung, eine Vorrichtung, ein Verfahren und ein Verwenden zu schaffen, welches eine längere Standzeit ermöglicht, kostengünstiger ist und/oder über einen längeren Zeitraum zuverlässig die Gewichtskraft ermittelt.

Die Aufgabe wird durch die Gegenstände der nebengeordneten Ansprüche gelöst. Vorteilhafte Ausführungsformen sind Gegenstand der entsprechenden abhängigen Patentansprüche und der hiernach folgenden Beschreibung.

Die Erfindung geht von dem Grundgedanken aus, dass mindestens ein Sensor außerhalb des Spreaders und der Twistlocks vorgesehen ist, mit dem eine von der Gewichtskraft des angehobenen Containers erfassbar ist. Im Rahmen der Erfindung wurde erstmals ein bisher als abwegig angesehener Weg beschritten, dass die Gewichtskraft nicht innerhalb des Spreaders und/oder der Twistlocks ermittelt wird, sondern entlang einer Verbindungslinie zwischen Spreader und einer Traverse. Eine flexible Anpassung der Traverse an den Spreader ist dabei möglich. Erfindungsgemäß wurde erkannt, dass der Sensor zur Erfassung der Gewichtskraft in einen Bereich verlegt werden kann, in dem weniger Belastungen vorliegen und die Gewichtskraft des angehobenen Containers aber dennoch unmittelbar bei einem für das Verladen notwendigen Vorgang mit hoher Präzision kostengünstig ermittelt werden kann. Der Bereich in dem der mindestens eine Sensor angeordnet ist, ermöglicht, dass ein ständiger Wechsel der Sensoren eingespart werden kann.

Es wird eine Vorrichtung zum Heben eines Containers und Erfassen einer Gewichtskraft des Containers geschaffen, die einen Spreader mit Twistlocks oder anderweitigen Verriegelungsmitteln zum Verriegeln mit dem Container aufweist. Ferner weist die Vorrichtung eine mit dem Spreader verbundene Traverse auf. Entlang einer Verbindungslinie zwischen Spreader und Traverse ist mindestens ein Sensor außerhalb des Spreaders und der Twistlocks oder Verriegelungsmittel vorgesehen, mit dem eine von der Gewichtskraft des angehobenen Containers abhängige Größe messbar ist.

Im Sinne der Beschreibung umfasst der Begriff "Spreader" ein zum Heben von Containern für den Land- und Seetransport eingesetztes Hebezeug, welches mittels an dem Spreader befestigte Seile oder Ketten an einem Kran hängen kann, der den Spreader und mithin den Container an eine gewünschte Stelle verfahren kann. Der Spreader kann auch von einer Containerbrücke oder einem Portalhubwagen angehoben werden. Bei dem Spreader kann es sich um einen, gegebenenfalls teleskopierbaren, Rahmen handeln, der auf unterschiedliche Abmessungen eines Containers eingestellt werden kann. Der Spreader weist Twistlocks als Verriegelungsmittel auf, mit denen der Spreader mit einem Container verbunden werden kann. Zur Verbindung des Spreaders mit einem Container können die Twistlocks in genormte Eckbeschläge des Containers eingesetzt bzw. eingeführt werden und zumindest teilweise um einen Winkel, insbesondere 90 °, verdreht werden, um eine formschlüssige Verbindung herzustellen. Es sind unterschiedliche Twistlock-Systeme bekannt und von der vorliegenden Beschreibung umfasst. Beispielsweise umfasst der Begriff "Twistlock" sowohl linksschließende Twistlocks als auch rechtsschließende Twistlocks. Zudem umfasst der Begriff "Twistlock" auch einen automatischen Twistlock, der halbautomatisch oder vollautomatisch ausgestaltet sein kann. Der Spreader kann mit klappbaren "Flippern" ausgestaltet sein, die ein Ausrichten des Spreaders bewirken, wenn der Spreader auf einen Container aufgesetzt wird. Bei Bedarf können die Flipper vom Betätiger des Hebezeugs bzw. Krans, Portalwagens oder ähnlichem nach oben und innen weggeklappt werden, um das Aufnehmen und Absetzen eines Containers direkt neben anderen Containern zu ermöglichen.

Im Sinne der Beschreibung umfasst der Begriff "Traverse" einen mechanischen Träger, der zur Stabilisierung, Befestigung oder Verbindung dient. Eine Traverse im Sinne der Beschreibung umfasst einen mechanischen Träger, wie er beim Anschlagen von Lasten bzw. Containern im Zusammenhang mit einem Spreader verwendet wird. Bei der Traverse kann es sich insbesondere um einen als "Headblock" bezeichneten mechanischen Träger handeln, an dem Seilrollen befestigt sind. Der Spreader kann an der Traverse lösbar befestigt werden und an der Traverse können Seilrollen oder ähnliches angeordnet sein, um Seile und/oder Ketten zu führen. Durch ein Anheben oder Senken der Traverse wird der Spreader aufgrund der Befestigung an der Traverse "mittelbar" angehoben bzw. gesenkt.

In einer bevorzugten Ausführungsform ist der Sensor in Kraftflussrichtung vor einem Befestigungspunkt einer lösbaren Verbindung des Spreaders mit der Traverse angeordnet. Hierdurch kann die Möglichkeit geschaffen werden, dass der Sensor im bestimmungsgemäßen Gebrauch oberhalb des Spreaders angeordnet ist und in einem Bereich vorliegt, der vor den harschen Bedingungen und dem oft rüden Umgang mit dem Material geschützt ist. Dabei wird unter dem Begriff "Kraftflussrichtung" in der üblichen Weise der Weg einer Kraft und/oder eines Moments vom Angriffspunkt, das heißt der Krafteinleitung, hier insbesondere "oben" am Hebezeug, bis zur Stelle, an der diese durch eine Reaktionskraft und/oder ein Reaktionsmoment aufgenommen wird, das heißt hier insbesondere am Spreader bzw. dem damit verbundenen Container, verstanden.

In einer bevorzugten Ausführungsform ist der Sensor an der Traverse angeordnet. Dabei wird unter dem Begriff "an der Traverse" im Sinne der Beschreibung verstanden, dass eine räumliche Anordnung an der Traverse betrachtet wird. Der Sensor muss nicht unmittelbar an der Traverse angeordnet sein, sondern - im Gegensatz zum Stand der Technik - ist der Sensor im räumlichen Bereich der Traverse angeordnet bzw. vorhanden. Insbesondere kann sich der Sensor oberhalb der Traverse befinden. Der Sensor ist damit an der - im bestimmungsgemäßen Gebrauch - Oberseite der Traverse positioniert. Der Begriff "oberhalb" umfasst dabei die Seite der Traverse, die der Seite der Traverse gegenüberliegt, an der an der Traverse angeordnete Seilrollen von einem Seil umschlungen werden. Der Sensor kann an der Seite der Traverse angeordnet sein, an der ein Öffnungswinkel eines Seils an einer Seilrolle vorliegt. Der Sensor ist damit in einem Bereich angeordnet, der Stößen, wie diese der Spreader bei einem seitlichen Anschlagen desselben erfährt, weniger ausgesetzt ist.

In einer bevorzugten Ausführungsform ist der Sensor für eine Ermittlung einer Belastung in Richtung der Gravitationskraft bzw. Erdanziehung ausgestaltet. Der Sensor kann damit eine Eigenschaft messen, die eine Veränderung in einer Richtung, insbesondere Zug und/oder Druck, und eine gegebenenfalls verbundene Längenänderung bewirkt. Dies ist vorteilhaft in Bezug auf den Sensor selbst, der vielgestaltig realisiert werden kann. Derartige Sensoren sind bekannt und es kann auf Erfahrung hinsichtlich der Auswertung von Signalen des Sensors zurückgegriffen werden.

In einer bevorzugten Ausführungsform ist mindestens eine sich von einem Befestigungspunkt am Spreader erstreckende Tragstange vorgesehen, die sich in einer Richtung längs der Verbindungslinie zwischen Traverse und Spreader erstreckt. Die Tragstange kann insbesondere an der Traverse verspannt befestigt werden. Der Sensor kann zur Ermittlung einer Zugbelastung auf die Tragstange, die als Zugstange ausgeführt sein kann, ausgestaltet sein. Hierdurch kann eine besonders einfach ausgebildete Vorrichtung geschaffen werden, bei der die Krafteinleitung mittels mindestens einer als Zugstange ausgestalteten Tragstange, die an der Traverse befestigt ist, erfolgt, die am Spreader an dort ausgestalteten Befestigungspunkten angreifen kann.

Sofern eine Tragstange beschrieben ist, so können auch mehrere, insbesondere gleich ausgestaltete Tragstangen vorgesehen sein, insbesondere können zwei, drei, vier oder mehr Tragstangen zur Befestigung des Spreaders an der Traverse vorgesehen sein. In einer besonders bevorzugten Ausführungsform sind vier Tragstangen gemäß der Beschreibung vorgesehen, die insbesondere in den Eckpunkten eines Rechtecks bezogen auf den Querschnitt der Traverse in Hubrichtung an der Traverse angeordnet sein können. Die Tragstangen können alle im Wesentlichen gemäß der Beschreibung ausgestaltet sein. Es ist aber auch möglich, dass ein oder mehr Tragstangen vorgesehen sind, die anders ausgestaltet sind, so dass ein, zwei, drei, vier oder alle Tragstangen wie in der Beschreibung beschrieben ausgestaltet sein können.

In einer bevorzugten Ausführungsform ist die Tragstange in Längsrichtung vorgespannt. Insbesondere kann die Tragstange hinsichtlich ihrer Länge vorgespannt werden. Hierdurch kann erreicht werden, dass starke Erschütterungen bzw. ein Spiel beim Absetzen oder Anheben des Spreaders bzw. des Containers an der Tragstange reduziert werden, um zu große Belastungsspitzen zu vermeiden. In einer bevorzugten Ausführungsform kann sich die Tragstange durch einen Kanal in der Traverse erstrecken und an gegenüberliegenden Seiten der Traverse vorgespannt bzw. verspannt sein. Insbesondere kann die Verspannung mittels mindestens einer Spannmutter, die an ein (Außen-)Gewinde der Tragstange angepasst ist, erreicht werden. Es können insbesondere mehr als eine Spannmutter an einem Ende in einem Bereich der Tragstange vorgesehen sein; beispielsweise zwei Spannmuttern, wobei eine Spannmutter auch die Funktion einer Kontermutter übernehmen kann.

Die Verspannung bzw. Vorspannung der Tragstange kann insbesondere dadurch erreicht werden, dass die Tragstange in Wirkrichtung mit einem Druck ausübenden Element, insbesondere einer Druckfeder, verbunden wird, die zu einer Verspannung der Tragstange führt. Das Druck ausübende Element kann sich beispielsweise an der Traverse abstützen und einen Druck auf die Tragstange ausüben, wenn insbesondere eine Spannmutter angezogen wird. Die Tragstange kann sich somit mit einem Ende mittelbar oder unmittelbar an der Traverse über ein Druck ausübendes Element abstützen und mittels einer am anderen Ende vorgesehenen Spannmutter verspannt werden. Es kann auch vorgesehen sein, dass im Bereich beider Enden der Tragstange (Spann-)Muttern vorhanden sind.

Die Tragstange kann sich beispielsweise in einem Kanal, der quer zur Längsachse der Traverse ausgebildet ist, durch die Traverse erstrecken. Die Tragstange kann sich im bestimmungsgemäßen Gebrauch von oben nach unten bzw. umgekehrt erstrecken. Insbesondere kann die Tragstange in Kraftflussrichtung liegen. Die Tragstange kann zwischen der oberen und der unteren Öffnung des Kanals bzw. der Oberseite und der Unterseite der Traverse in Längsrichtung der Tragstange verspannt sein. Insbesondere kann eine stufenlose Spannmöglichkeit an den Enden des Kanals für eine geometrische Anpassung eines Aufhängungspunkts für den Befestigungspunkt am Spreader dienen. Die Verspannung einer Tragstange kann auch zu einer Verschiebung der zu messenden Kräfte führen. Eine Verspannung kann beispielsweise zu einer Verschiebung hin zu größeren Messwerten führen, so dass Messungenauigkeiten durch ungünstige Lastrichtungswechsel und/oder ungünstig kleine Messwerte vermieden werden können.

In einer bevorzugten Ausführungsform ist die Tragstange, insbesondere durch die Traverse, in einer Gleitlagerbuchse geführt. Die Verspannung kann mittels mindestens einer Spannmutter, die oberhalb und/oder unterhalb der Traverse angeordnet sein kann, erreicht werden, indem an der Tragstange ein an die Spannmutter angepasstes Außengewinde, insbesondere im endseitigen Bereich der Tragstange, ausgestaltet ist. Durch die Führung in der Gleitlagerbuchse kann erreicht werden, dass die Tragstange möglichst reibungsarm und möglichst ohne viel Spiel geführt wird. Insbesondere kann die Tragstange gegen eine Verdrehung in der Gleitlagerbuchse geführt sein, um eine möglichst genaue Stellung eines Aufhängungspunkts für die Befestigungspunkte am Spreader zu ermöglichen. Es kann eine Justierung der Tragstange an einer oberen Spannmutter bzw. den oberen Spannmuttern bei abgekoppeltem Spreader ermöglicht werden. Das Druck ausübende Element bzw. die Druckfeder kann sich an einem Abschluss der Gleitlagerbuchse oder der Traverse abstützen und auf die Tragstange einwirken.

In einer besonders bevorzugten Ausführungsform kann der Sensor als a) von der Tragstange durchgriffenes Kraftmesselement, b) Dehnungsmessstreifen an der Tragstange, c) piezoelektrischer Kraftmessaufnehmer an der Tragstange, d) optischer Kraftmessaufnehmer an der Tragstange, e) induktiver Kraftmessaufnehmer an der Tragstange oder f) kapazitiver Kraftmessaufnehmer an der Tragstange ausgestaltet sein. Derartige Sensoren sind bekannt und können an der Tragstange angeordnet werden, um eine Zugbelastung auf die Tragstange zu ermitteln, ihre Auswertung ist auf anderen Gebieten schon bekannt und die Sensoren sind günstig. Es kann insbesondere ein Sensor verwendet werden, der an die äußeren Bedingungen angepasst ist. Ein der Zugbelastung der Tragstange entsprechendes Sensorsignal kann einfach ermittelt werden.

In einer besonders bevorzugten Ausführungsform wird der Sensor von der Tragstange durchgriffen und stützt sich an der Traverse zumindest mittelbar ab, wobei die Tragstange auf den Sensor bei einer Zugbelastung einwirkt und ein entsprechendes Sensorsignal abgibt, welches von einer elektronischen Einheit abgegriffen werden kann. Die elektronische Einheit kann als Auswerteeinheit das Signal hinsichtlich des Gewichts auswerten und berechnen. Eine Auswerteeinheit kann zusätzlich oder alternativ auch nach der elektronischen Einheit angeordnet sein. Der Sensor kann von der Tragstange durchgriffen werden und sich in Wirkverbindung zwischen Spannmuttter und einer Abstützfläche an der Traverse bzw. einer Abstützfläche an der Gleitbuchse befinden.

In einer bevorzugten Ausführungsform ist die Tragstange mit einem einen (Quer-)Stift aufnehmenden Kopf am Spreader verbunden. Hierdurch kann - sollte ein Spreader ausgetauscht werden müssen - eine einfache Stiftverbindung zur Befestigung der Tragstange, die ihrerseits an der Traverse befestigt ist, am Spreader erreicht werden. Hierdurch kann eine einfache, lösbare Verbindung zwischen der Tragstange und dem Spreader und damit mittelbar zwischen dem Spreader und der Traverse geschaffen werden. Der Stift kann durch eine Bohrung des Spreaders und eine Bohrung am Kopf der Tragstange formschlüssig in radialer Richtung geführt bzw. gesteckt werden. Es ist ein Presssitz eines, insbesondere zylindrischen, Stifts möglich. Es ist alternativ oder zusätzlich möglich, dass ein Spannstift oder Kerbstift verwendet wird. Die Verwendung eines Bolzens, der quer in eine Bohrung des Stifts gesteckt werden kann, ist ebenfalls möglich. Das Lösen der Stiftverbindung kann durch ein Entfernen des Stifts, gegebenenfalls ein Herausschlagen des Stifts, erfolgen.

In einer bevorzugten Ausführungsform ist das Druck ausübende Element, welches bevorzugt als Druckfeder ausgestaltet ist, die insbesondere die Tragstange zumindest teilweise umgibt, zwischen dem Kopf und einer Anlagefläche an der Traverse und/oder der Gleitlagerbuchse angeordnet.

Die Erfindung schafft auch ein Verfahren zum Ermitteln einer Gewichtskraft eines angehobenen Containers, wobei der Container in einem Verfahrensschritt angehoben wird. Für das Anheben wird eine Vorrichtung bereitgestellt, die einen Spreader mit Twistlocks oder anderweitigen Verriegelungsmitteln zum Verriegeln mit dem Container und eine mit dem Spreader verbundene Traverse aufweist. Eine von der Gewichtskraft des angehobenen Containers hervorgerufene Veränderung entlang einer Verbindungslinie zwischen Spreader und Traverse wird außerhalb des Spreaders und der Twistlocks oder den Verriegelungsmittel ermittelt.

Die Beschreibung in Bezug auf die Vorrichtung ergänzt zwanglos die Ausführungen zum Verfahren, da mit der Vorrichtung entsprechende Verfahrensschritte ausgeführt werden können.

Die Erfindung schafft auch ein Verwenden eines Sensors zum Ermitteln einer Gewichtskraft eines angehobenen Containers, wobei zum Anheben des Containers eine Vorrichtung verwendet wird, die einen Spreader mit Twistlocks oder anderweitigen Verriegelungsmitteln zum Verriegeln mit dem Container und eine mit dem Spreader verbundene Traverse aufweist. Mindestsens ein Sensor außerhalb des Spreaders und der Twistlocks oder den anderweitigen Verriegelungsmitteln wird zur Ermittlung einer Veränderung entlang einer Verbindungslinie zwischen Spreader und Traverse verwendet.

Die Beschreibung in Bezug auf die Vorrichtung und/oder das Verfahren ergänzt zwanglos die Ausführungen zum Verwenden, da in der Vorrichtung und/oder dem Verfahren dem Verwenden innewohnende Merkmale inhärent vorhanden sind.

Die Erfindung wird nachfolgend anhand eines in den Zeichnungen dargestellten Ausführungsbeispiels näher erläutert.

In den Zeichnungen zeigt:
- Fig. 1: einen Spreader, eine Traverse und eine Tragstange in teilweise geschnittener, isometrischer Darstellung in Längsrichtung des Spreaders;

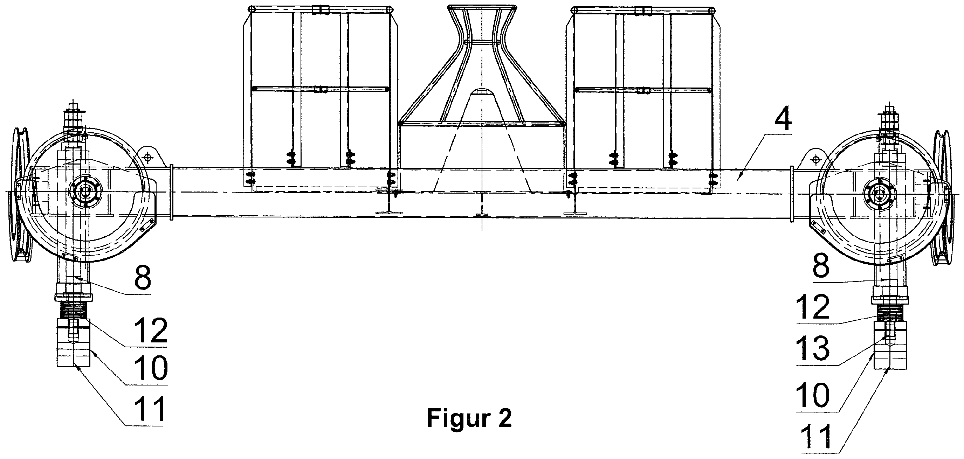

- Fig. 2: die Traverse und die Tragstange der Figur 1 in einer Seitenansicht;

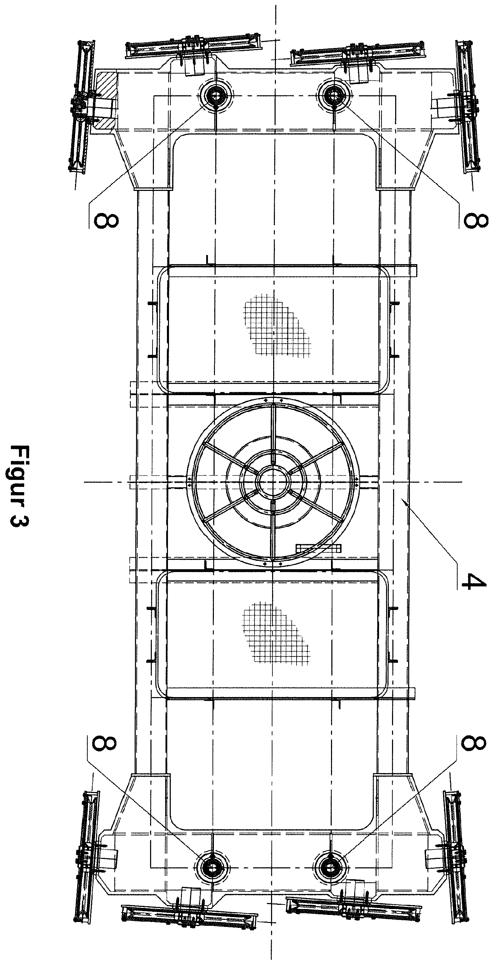

- Fig. 3: die Traverse und die Tragstange der Figur 1 in einer Ansicht von oben;

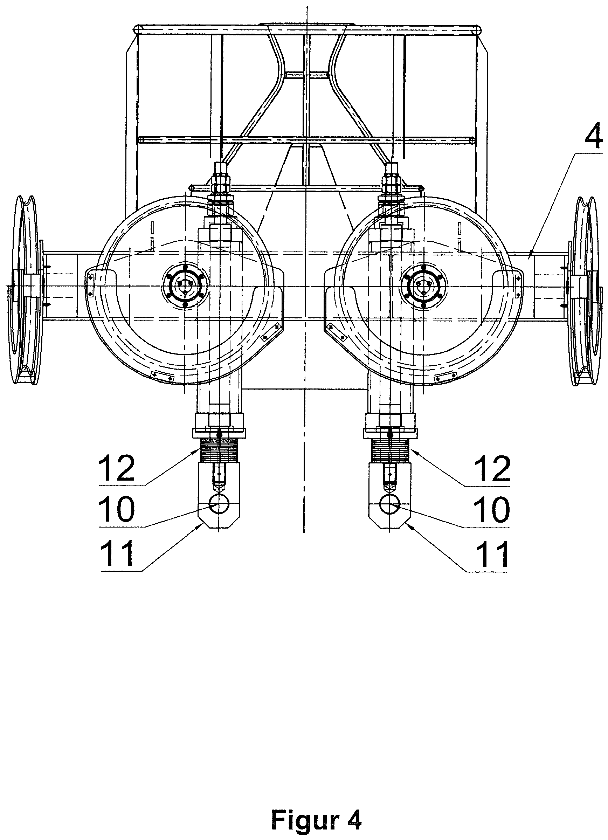

- Fig. 4: die Traverse und die Tragstange der Figur 1 in einer weiteren Ansicht von vorne in Längsrichtung der Traverse; und

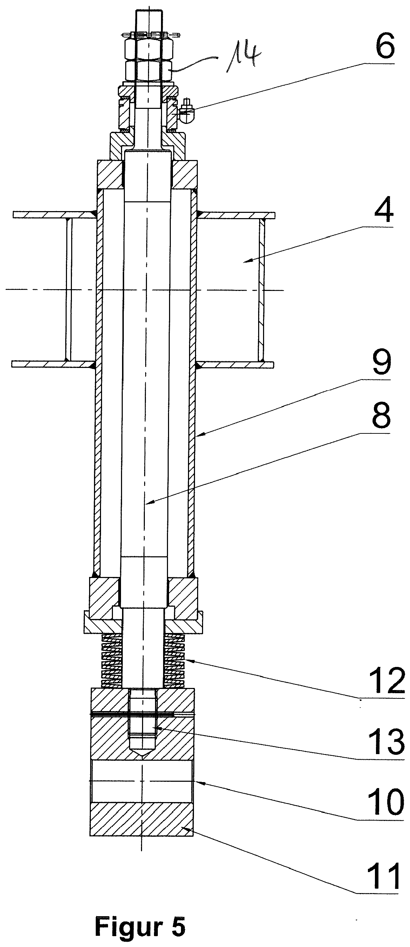

- Fig. 5: eine Detailansicht der Tragstange in teilweise geschnittener Darstellung.

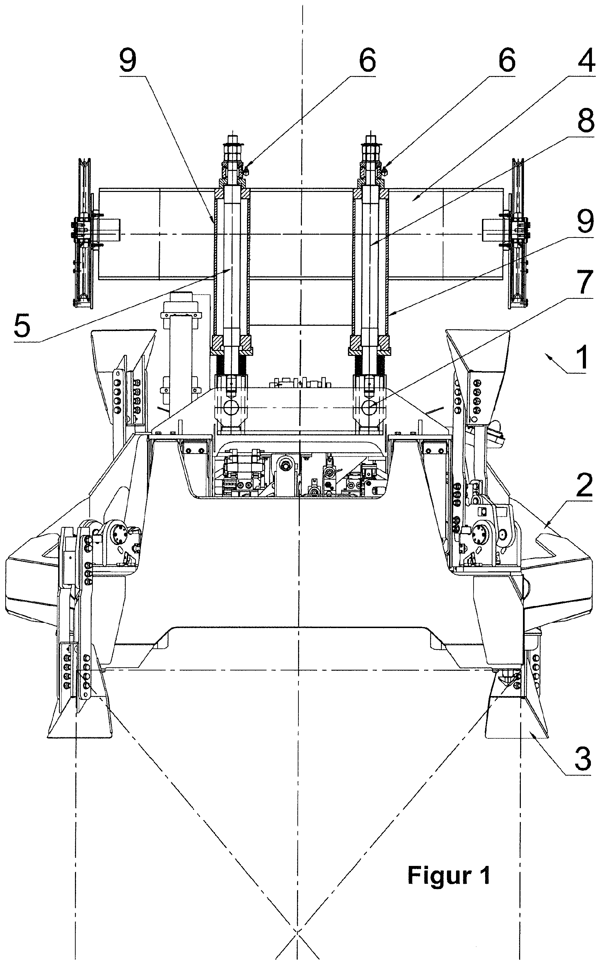

Die Figur 1 zeigt in einer isometrischen Darstellung eine Vorrichtung 1 zum Heben eines (nicht dargestellten) Containers und Ermitteln einer Gewichtskraft des Containers. Die Vorrichtung 1 weist einen Spreader 2 auf. An dem Spreader 2 sind Twistlocks 3 vorgesehen, mittels derer der (nicht dargestellte) Container an dem Spreader 2 verriegelt werden kann. Ferner weist die Vorrichtung 1 eine mit dem Spreader 2 verbundene Traverse 4 auf. Die Traverse 4 und der Spreader 2 sind entlang einer Verbindungslinie 5 verbunden. Entlang der Verbindungslinie 5 ist ein Sensor 6 vorgesehen. Der Sensor 6 ist außerhalb des Spreaders 2 und der Twistlocks 3 angeordnet bzw. positioniert. Mittels des Sensors 6 ist eine von der Gewichtskraft des angehobenen (nicht dargestellten) Containers abhängige Größe messbar.

Der Sensor 6 ist in Kraftflussrichtung vor dem Befestigungspunkt 7, der zur Befestigung des Spreaders 2 mit dem weiteren Hebezeug dient, angeordnet. Am Befestigungspunkt 7 ist eine lösbare Verbindung des Spreaders 2 mit der Traverse 4 möglich. Am Befestigungspunkt 7 ist eine Stiftverbindung mit der Traverse 4 ausbildbar. Dazu ist an dem Spreader 2 am Befestigungspunkt 7 eine Querbohrung vorgesehen.

An der Traverse 4 sind vier Tragstangen 8 befestigt, die in einer rechteckförmigen Anordnung bezogen auf den Querschnitt der Traverse 4 vorliegen. Die Tragstangen 8 werden in Rohren 9 geführt.

Jede der Traversen 4 weist endseitig eine Bohrung 10 zum Ausbilden der Stiftverbindung mit dem Spreader 2 auf. Dazu ist an jeder Tragstange 8 endseitig ein Kopf 11 vorhanden. Im dargestellten Ausführungsbeispiel ist ein die Bohrung 10 aufweisender Kopf 11 auf ein endseitiges Gewinde bzw. einen Gewindezapfen 13 der Tragstange 8 aufgeschraubt. Das Aufschrauben des Kopfes 11 an der Tragstange 8 erfolgt unter Ausbilden einer Vorspannung der Tragstange 8, die durch ein Federelement 12 zwischen dem Abschluss des Rohres 9 und dem Kopf 11 auf der einen Seite und der Spannmutter 14 an der Tragstange 8 vorliegt. Die Tragstange 8 ist somit in Längsrichtung, das heißt der Richtung der Verbindungslinie zwischen Spreader 2 und Traverse 4 vorgespannt. Für eine Verdrehsicherung ist der Kopf 11 am endseitig vorliegenden Gewindezapfen 13 der Tragstange 8 verstiftet.

Oberhalb der Traverse 4 ist die Tragstange 8 in Wirkrichtung beim Anheben des Containers mit dem Sensor 6 verbunden. Zwischen dem kopfseitigen Abschluss 14 des Rohres 9, welches dem kopfseitigen Ende der Tragstange 8 gegenüberliegt, und dem Sensor 6, der als Kraftmessring ausgestaltet ist, liegt ein Druckstück vor. Beabstandet von dem Abschluss des Rohres 9 ist am Sensor 6 gegenüberliegend ein weiteres Druckstück vorhanden.

Die Tragstange 8 wird umfangsseitig in dem als Gleitlagerbüchse ausgestalteten Rohr 9 geführt. Die Spannmutter 14 und das Federelement 12 stützen sich an den Enden des Rohres 9 bzw. an an den Enden des Rohres 9 ausgebildeten Abstützflächen, die quer zur Längserstreckung des Rohres 9 verlaufen, ab.

## Patentansprüche

1. Vorrichtung (1) zum Heben eines Containers und Ermitteln einer Gewichtskraft des Containers, aufweisend einen Spreader (2) mit Twistlocks (3) oder anderweitigen Verriegelungsmitteln zum Verriegeln mit dem Container, und eine mit dem Spreader (2) verbundene Traverse (4), **dadurch gekennzeichnet, dass** entlang einer Verbindungslinie (5) zwischen Spreader (2) und Traverse (4) mindestens ein Sensor (6) außerhalb des Spreaders (2) und der Twistlocks (3) oder Verriegelungsmittel vorgesehen ist, mit dem eine von der Gewichtskraft des angehobenen Containers abhängige Größe messbar ist.

2. Vorrichtung (1) nach Anspruch 1, **dadurch gekennzeichnet, dass** der Sensor (6) in Kraftflussrichtung vor einem Befestigungspunkt (7) einer lösbaren Verbindung des Spreaders (2) mit der Traverse (4) angeordnet ist.

3. Vorrichtung (1) nach Anspruch 1 oder 2, **dadurch gekennzeichnet, dass** der Sensor (6) an der Traverse (4) angeordnet ist.

4. Vorrichtung (1) nach einem der Ansprüche 1 bis 3, **dadurch gekennzeichnet, dass** der Sensor (6) für eine Ermittlung einer Belastung in Richtung der Gravitation ausgestaltet ist.

5. Vorrichtung (1) nach einem der Ansprüche 1 bis 4, **dadurch gekennzeichnet, dass** mindestens eine sich von einem Befestigungspunkt (7) am Spreader (2) erstreckende Tragstange (8) vorgesehen ist, die sich in einer Richtung längs der Verbindungslinie (5) zwischen Traverse (4) und Spreader (2) erstreckt, wobei der Sensor (6) zur Ermittlung einer Zugbelastung der Tragstange (8) ausgestaltet ist.

6. Vorrichtung (1) nach Anspruch 5, **dadurch gekennzeichnet, dass** der Sensor (6) als
a. von der Tragstange (8) durchgriffenes Kraftmesselement;
b. Dehnungsmesstreifen an der Tragstange (8);
c. piezoelektrischer Kraftmessaufnehmer an der Tragstange (8);
d. optischer Kraftmessaufnehmer an der Tragstange (8);
e. induktiver Kraftmessaufnehmer an der Tragstange (8); oder
f. kapazitiver Kraftmessaufnehmer an der Tragstange (8) ausgestaltet ist.

7. Vorrichtung (1) nach Anspruch 5 oder 6, **dadurch gekennzeichnet, dass** die Tragstange (8) mit einem einen Querstift aufnehmenden Kopf (11) am Spreader (2) verbunden ist.

8. Vorrichtung (1) nach einem der Ansprüche 5 bis 7, **dadurch gekennzeichnet, dass** die Tragstange (8) in Längsrichtung vorgespannt ist.

9. Vorrichtung (1) nach einem der Ansprüche 5 bis 8, **dadurch gekennzeichnet, dass** die Tragstange (8) in einem Rohr (9) geführt ist.

10. Verfahren zum Ermitteln einer Gewichtskraft eines angehobenen Containers, wobei der Container in einem Verfahrensschritt angehoben wird, wobei für das Anheben eine Vorrichtung (1) bereit gestellt wird, die einen Spreader (2) mit Twistlocks (3) oder anderweitigen Verriegelungsmitteln zum Verriegeln mit dem Container und eine mit dem Spreader (2) verbundene Traverse (4) aufweist, **dadurch gekennzeichnet, dass** eine von der Gewichtskraft des angehobenen Containers hervorgerufene Veränderung entlang einer Verbindungslinie (5) zwischen Spreader (2) und Traverse (4) außerhalb des Spreaders (2) und der Twistlocks (3) oder den Verriegelungsmitteln ermittelt wird.

11. Verwenden eines Sensors (6) zum Ermitteln einer Gewichtskraft eines angehobenen Containers, wobei zum Anheben des Containers eine Vorrichtung (1) verwendet wird, die einen Spreader (2) mit Twistlocks (3) oder anderweitigen Verriegelungsmitteln zum Verriegeln mit dem Container und eine mit dem Spreader (2) verbundene Traverse (4) aufweist, **dadurch gekennzeichnet, dass** der Sensor (6) außerhalb des Spreaders (2) und der Twistlocks (3) oder den anderweitigen Verriegelungsmitteln zur Ermittlung einer Veränderung entlang einer Verbindungslinie (5) zwischen Spreader (2) und Traverse (4) verwendet wird.
